(19) Europäisches Patentamt / European Patent Office / Office européen des brevets

(11) **EP 3 338 887 B1**

(12) **FASCICULE DE BREVET EUROPEEN**

(45) Date de publication et mention de la délivrance du brevet:
**04.09.2024 Bulletin 2024/36**

(21) Numéro de dépôt: **17306621.8**

(22) Date de dépôt: **22.11.2017**

(51) Classification Internationale des Brevets (IPC):
**B01J 37/20** (2006.01)    **B01J 37/18** (2006.01)
**B01J 23/882** (2006.01)    **B01J 27/19** (2006.01)
**B01J 27/051** (2006.01)    **B01J 37/02** (2006.01)
**C10G 45/08** (2006.01)    B01J 23/94 (2006.01)
B01J 27/30 (2006.01)    B01J 23/883 (2006.01)
B01J 23/888 (2006.01)

(52) Classification Coopérative des Brevets (CPC):
(C-Sets disponibles)
**B01J 23/002; B01J 23/882; B01J 27/0515;**
**B01J 27/19; B01J 35/615; B01J 35/635;**
**B01J 35/647; B01J 37/0201; B01J 37/0236;**
**B01J 37/18; B01J 37/20; C10G 45/08;**
B01J 23/883; B01J 23/888; B01J 23/8885; (Cont.)

(54) **PROCÉDÉ DE SULFURATION D'UN CATALYSEUR À PARTIR D'UNE COUPE D'HYDROCARBURES PRÉALABLEMENT HYDROTRAITÉE ET D'UN COMPOSÉ SOUFRÉ**

SCHWEFELUNGSVERFAHREN EINES KATALYSATORS MITHILFE EINER ZUVOR MITTELS HYDROTREATING VORBEHANDELTEN KOHLENWASSERSTOFFFRAKTION UND EINER SCHWEFELKOMPONENTE

PROCESS FOR SULPHURISING A CATALYST USING A PREVIOUSLY HYDROTREATED HYDROCARBON FRACTION AND A SULPHUR COMPOUND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2016 FR 1663118**

(43) Date de publication de la demande:
**27.06.2018 Bulletin 2018/26**

(73) Titulaire: **IFP Energies nouvelles**
**92852 Rueil-Malmaison Cedex (FR)**

(72) Inventeur: **GUICHARD, Bertrand**
**38140 IZEAUX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A1- 1 046 424    WO-A2-02/062471**
**FR-A1- 2 758 478    FR-A1- 2 997 415**

(Cont. page suivante)

(52) Classification Coopérative des Brevets (CPC):
(Cont.)
B01J 23/94; B01J 27/30; B01J 2523/00;
C10G 2300/70

C-Sets
B01J 2523/00, B01J 2523/51, B01J 2523/68,
B01J 2523/845

**Description**

**Art Antérieur**

Habituellement, un catalyseur d'hydrotraitement de coupes hydrocarbonées est mis en oeuvre dans le but d'éliminer les composés soufrés ou azotés ou encore aromatiques contenus dans celles-ci afin de mettre par exemple un produit pétrolier aux spécifications requises (teneur en soufre, teneur en aromatiques etc..) pour une application donnée (carburant automobile, essence ou gazole, fioul domestique, carburéacteur). Il peut également s'agir de prétraiter cette coupe afin d'en éliminer les impuretés ou de l'hydrogéner avant de lui faire subir différents procédés de transformation pour en modifier les propriétés physico-chimiques, tels que par exemple les procédés de reformage, d'hydrocraquage de distillats sous vide, de craquage catalytique, d'hydroconversion de résidus atmosphériques ou sous vide. La composition et l'utilisation des catalyseurs d'hydrotraitement sont particulièrement bien décrites dans l'article de l'ouvrage Catalysis by Transition Metal Sulphides, From Molecular Theory to Industrial Application, de RAYBAUD Pascal et TOULHOAT Hervé, paru aux éditions Technip.

Le durcissement des normes de pollution automobile dans la communauté européenne (Journal Officiel de l'Union européenne, L76, 22 mars 2003, Directive 2003/70/CE, pages L76/10-L76/19) a contraint les raffineurs à réduire très fortement la teneur en soufre dans les carburants diesel et les essences (au maximum 10 parties par million poids (ppm) de soufre au 1er janvier 2009, contre 50 ppm au 1er janvier 2005) et des normes analogues ont ou vont être mises en place progressivement partout dans le monde. Par ailleurs, les raffineurs se trouvent contraints d'utiliser des coupes de plus en plus réfractaires aux procédés d'hydrotraitement d'une part parce que les bruts sont de plus en plus lourds et contiennent par conséquent de plus en plus d'impuretés, d'autre part du fait de l'augmentation des procédés de conversion dans les raffineries. En effet, ceux-ci génèrent des coupes plus difficiles à hydrotraiter que les coupes directement issues de la distillation atmosphérique. Par plus difficile à hydrotraiter, on entend habituellement des températures de fonctionnement plus élevées pour atteindre une même teneur en impuretés dans l'effluent, et par voie de conséquence des durées de cycle qui peuvent être réduites. Ces coupes nécessitent des catalyseurs possédant des fonctions hydrodésulfurantes et hydrogénantes fortement améliorées par rapport aux catalyseurs traditionnels.

En outre, les procédés de conversion comme le craquage catalytique ou l'hydrocraquage utilisent des catalyseurs possédant une fonction acide, ce qui les rend particulièrement sensibles à la présence d'impuretés telles que par exemple des composés azotés, et particulièrement de composés azotés basiques. Il est donc nécessaire d'utiliser des catalyseurs de prétraitement de ces coupes de façon à enlever ces composés.

Les catalyseurs d'hydrotraitement classiques comprennent généralement un support à base d'au moins un oxyde d'un métal ou de métalloïde et une phase active à base de métaux des groupes VIB et VIII sous leurs formes oxydes et éventuellement un élément dopant tel que le phosphore. La préparation de ces catalyseurs comprend généralement une étape d'imprégnation des métaux et du phosphore sur le support, suivie d'un séchage et éventuellement d'une calcination permettant d'obtenir la phase active sous sa forme oxyde. Dans certains cas, ils peuvent aussi inclure la présence au cours de leur préparation d'additifs organiques.

Avant leur utilisation dans une réaction d'hydrotraitement et/ou d'hydrocraquage, les précurseurs catalytiques, sont généralement soumis à une étape de sulfuration afin de transformer les oxydes métalliques en sulfures. Cette étape permet de transformer le précurseur catalytique obtenu par l'un quelconque des modes de préparations connus par l'Homme du métier en un catalyseur sulfuré afin de former son espèce active. C'est aussi une étape nécessaire à l'activation des catalyseurs régénérés. Cette étape d'activation ou de sulfuration est aussi très bien connue par l'Homme du métier.

De nombreux procédés de sulfuration ont été décrits dans l'état de la technique. En pratique, on distingue les procédés de sulfuration en phase liquide de ceux en phase gaz.

Pour les procédés dits en phase liquide, le précurseur catalytique est traité, en présence d'hydrogène, au moyen d'une phase liquide (généralement un hydrocarbure liquide tel qu'un gazole) comprenant des composés soufrés. Il s'agit habituellement d'un liquide issu de la distillation atmosphérique et dont la température d'ébullition et/ou les points de coupe sont inférieurs à ceux de la coupe qui est ensuite traitée sur l'unité d'hydrotraitement/hydrocraquage concernée. Ce type de procédé est notamment bien décrit dans la demande de brevet US 4,111,796 ou encore US 4,172,027. On y retrouve la possibilité de sulfurer les catalyseurs avec des agents soufrés tels que des mercaptans, du diméthyl sulfure, du disulfure de carbone, et tout autre composé soufré comprenant entre 1 et 20 atomes de carbone. Des polysulfures tels que TPS37® sont aussi connus comme étant de bons agents sulfurant, comme décrit dans la demande de brevet FR 2572309 ou encore pour les procédés de sulfuration type Sulficat® décrits dans les brevets EP 130850, EP 0785022 ou US 4,530,917 dans lesquels l'agent sulfurant est introduit par imprégnation dans le catalyseur sous forme oxyde préalablement à l'étape d'activation classiquement réalisée. Enfin, on trouve aussi la demande de brevet FR 2706326 qui revendique l'utilisation de deux composés soufrés, le premier étant similaire à ceux précités et le second plus difficilement décomposable est utilisé spécifiquement à plus haute température. La demande de brevet EP 0064429 fixe certaines règles pour optimiser la sulfuration, et notamment la mise en oeuvre de sulfurations par paliers de température.

Pour les procédés dits en phase gazeuse, le catalyseur est traité par un mélange gazeux contenant du soufre (la plupart du temps, du sulfure d'hydrogène). F.E. Massoth présente notamment une étude très riche sur ce mode de sulfuration dans Journal of catalysis, volume 36, page 164, publié en 1975. Ce type de procédé est avantageusement mis en oeuvre au laboratoire ou ex-situ lorsque les contraintes industrielles ne permettent pas de réaliser la sulfuration sur site ou pour des raisons spécifiques au raffineur. La demande de brevet EP 1 634 939 décrit un procédé de sulfuration réalisé à partir d'un gaz contenant de l'hydrogène sulfuré ($H_2S$) et de l'hydrogène ($H_2$), dont la spécificité repose sur, d'une part, un rapport molaire $H_2S / H_2$ supérieur à 4 et, d'autre part, une pression partielle d'$H_2S$ au moins égale à 1 kPa.

On trouve également la demande de brevet WO 01/76741 qui décrit un procédé de sulfuration d'un catalyseur sous forme oxyde comprenant aussi un additif organique et dans lequel le catalyseur est, dans un premier temps, mis en contact avec un liquide organique, puis, dans un second temps, mis en contact avec de l'hydrogène et un composé soufré tel que l'$H_2S$, le liquide organique apportant au moins 40% du soufre total. Le liquide organique est habituellement une coupe pétrolière contenant du soufre, c'est-à-dire issu de la distillation atmosphérique. Dans le même esprit, le document EP 130850 décrit la possibilité d'ajouter au précurseur catalytique, en plus d'un composé soufré, un autre additif organique (par exemple une cétone) avant de réaliser la sulfuration sous hydrogène.

Si de nombreux travaux ont récemment permis d'améliorer les performances catalytiques en modifiant les méthodes de préparation du précurseur catalytique, il apparaît également pour l'Homme du métier que modifier le procédé de sulfuration est au moins aussi important, avec l'avantage de pouvoir appliquer celui-ci à n'importe quel catalyseur.

Aucun document ne divulgue l'activation d'un catalyseur par une étape de sulfuration de type phase liquide, c'est-à-dire, via une coupe hydrocarbonée, et un composé soufré (autre que ceux présent naturellement dans la coupe hydrocarbonée), la coupe hydrocarbonée ayant au préalable été au moins partiellement hydrotraitée et ne contenant donc plus de soufre, ou du moins dans des proportions faibles ou encore ne contenant alors plus que les composés soufrés les plus réfractaires tels que le dibenzothiophène. L'ensemble des documents connus décrivent en effet la mise en oeuvre de la sulfuration avec une coupe hydrocarbonée non traitée.

FR 2758478 décrit la présulfuration d'un catalyseur Co-Mo/alumine au moyen 100g d'hexadécane additivé de 2g de DMDS.

WO 02/062471 décrit un procédé de sulfuration d'un catalyseur d'hydrodésulfuration dans un réacteur à colonne de distillation.

De manière surprenante, la demanderesse a constaté que la mise en oeuvre d'un procédé de sulfuration d'un précurseur catalytique qui comprend une mise en contact dudit précurseur catalytique en présence d'hydrogène avec une coupe hydrocarbonée au moins partiellement hydrotraitée et un composé soufré autre que ceux présents dans la coupe hydrocarbonée choisie permet de sulfurer le précurseur catalytique plus rapidement et/ou conduit, pour un même temps de sulfuration, à un catalyseur généralement plus actif que ceux obtenus classiquement par les procédés de sulfuration connus de l'Homme du métier, par exemple en présence d'une coupe hydrocarbonée non hydrotraitée et d'un composé soufré.

## Description sommaire de l'invention

Dans le cadre de la présente invention, les différents modes de réalisation présentés peuvent être utilisés seul ou en combinaison les uns avec les autres, sans limitation de combinaison.

Il est précisé que, dans toute la description, l'expression « compris(e) entre ... et ... » doit s'entendre comme incluant les bornes citées.

L'invention se rapporte à un procédé de sulfuration d'un précurseur catalytique selon la revendication 1 comprenant un support sur lequel sont déposés au moins un métal du groupe VIB et au moins un métal du groupe VIII, dans lequel on met en contact, en présence d'hydrogène, ledit précurseur avec une coupe hydrocarbonée hydrotraitée comprenant au moins 90% poids de composés hydrocarbures dont la température d'ébullition est comprise entre 30°C et 520°C à pression atmosphérique et un composé soufré ajouté à ladite coupe hydrocarbonée hydrotraitée, la teneur en soufre ajouté étant comprise entre 0,2 et 6% poids par rapport au poids de la coupe hydrocarbonée hydrotraitée, ledit procédé de sulfuration étant mis en oeuvre à une température comprise entre 150 et 400°C, à une pression totale comprise entre 1 et 15 MPa, avec une vitesse volumique horaire (VVH) comprise entre 0,1 $h^{-1}$ et 5 $h^{-1}$ et avec un rapport volumique entre le débit total d'hydrogène et le débit de la coupe hydrocarbonée hydrotraitée compris entre 30 et 1400 Nl/l, étant entendu que ladite coupe hydrocarbonée mise en oeuvre a été préalablement hydrotraitée de manière à réduire d'au moins 50% sa teneur en soufre par rapport à sa teneur en soufre avant hydrotraitement.

Dans un mode de réalisation préféré, on réalise au moins un palier de sulfuration à une température comprise entre 150 et 400°C.

Dans un mode de réalisation préféré, la pression totale est comprise entre 1,5 et 14,5 MPa et le rapport volumique entre le débit total d'hydrogène et le débit de la coupe hydrocarbonée hydrotraitée est compris entre 50 et 1000 NI/I.

Dans un mode de réalisation préféré, la charge hydrocarbonée hydrotraitée présente une teneur en soufre inférieure à 5000 ppm poids et une teneur en azote inférieure à 300 ppm poids, par rapport au poids total de la coupe hydrocarbonée hydrotraitée.

Dans un mode de réalisation préféré, la coupe hydrocarbonée hydrotraitée est choisie parmi les coupes gazole, kérosène, essences, ou distillats sous vide, prise seule ou en mélange.

Dans un mode de réalisation préféré, la coupe hydrocarbonée hydrotraitée est une coupe gazole présentant au moins 90% des composés dont la température d'ébullition est comprise entre 250°C et 400°C à pression atmosphérique et une teneur en soufre comprise entre 0,1 et 3 000 ppm poids.

Dans un mode de réalisation préféré, la coupe hydrocarbonée hydrotraitée est une coupe essence comprenant au moins 90% poids de composés dont la température d'ébullition est comprise entre 30 et 260°C à pression atmosphérique et une teneur en soufre comprise entre 0,1 et 1000 ppm poids.

Dans un mode de réalisation préféré, la coupe hydrocarbonée hydrotraitée est une coupe distillat sous vide présentant au moins 80% poids de composés hydrocarbures dont la température d'ébullition est supérieure à 340°C à pression atmosphérique et une teneur en soufre comprise entre 0,1 et 5000 ppm poids.

Dans un mode de réalisation préféré, le composé soufré ajouté et mis en oeuvre est choisi parmi le soufre élémentaire, le disulfure de carbone ($CS_2$), les composés organiques soufrés tels que les mercaptans, les sulfures, les disulfures, les polysulfures, les thiophènes, les sulfoxydes, pris seul ou en mélange.

Dans un mode de réalisation préféré, le précurseur catalytique comprend un support à base d'alumine ou de silice ou de silice-alumine, au moins un métal du groupe VIB à une teneur exprimée en oxyde comprise entre 3 et 40 % poids et au moins un métal du groupe VIII à une teneur exprimée en oxyde comprise entre 0,5 et 10 % poids, par rapport au poids total du précurseur catalytique.

Dans un mode de réalisation préféré, le précurseur catalytique comprend au moins un élément dopant choisi parmi le phosphore, le bore, et le fluor et/ou au moins un composé organique utilisable lors de la préparation du précurseur catalytique.

Dans un mode de réalisation préféré, le métal du groupe VIB est choisi parmi molybdène et le tungstène et le métal du groupe VIII est choisi parmi le cobalt et le nickel.

Dans un mode de réalisation très préféré, les métaux du groupe VIB et VIII sont choisis parmi les combinaisons cobalt-molybdène, nickel-molybdène, nickel-tungstène ou nickel-cobalt-molybdène, ou nickel-molybdène-tungstène Un autre objet de la présente invention porte sur le catalyseur obtenu par le procédé de sulfuration selon l'invention.

Un procédé d'hydrotraitement d'une charge d'hydrocarbures met en oeuvre un catalyseur sulfuré par le procédé selon l'invention, le procédé d'hydrotraitement étant réalisé à une température comprise entre 180 et 450°C, à une pression comprise entre 0,5 et 30 MPa, avec une vitesse volumique horaire comprise entre 0,1 et 20 $h^{-1}$ et avec un rapport volumique entre l'hydrogène et la charge d'hydrocarbures compris entre 50 à 5000 NI/I.

## Description détaillée de l'invention

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

## Procédé de sulfuration

La présente invention concerne un procédé de sulfuration d'un précurseur catalytique selon la revendication 1 comprenant un support sur lequel sont déposés au moins un métal du groupe VIB et au moins un métal du groupe VIII, dans lequel on met en contact en présence d'hydrogène ledit précurseur avec une coupe hydrocarbonée hydrotraitée comprenant au moins 90% poids de composés hydrocarbures dont la température d'ébullition est comprise entre 30°C et 520°C à pression atmosphérique et un composé soufré ajouté à ladite coupe hydrocarbonée hydrotraitée, la teneur en soufre ajouté étant comprise entre 0,2 et 6% poids par rapport au poids de la coupe hydrocarbonée hydrotraitée, ledit procédé de sulfuration étant mis en oeuvre à une température comprise entre 150 et 400°C, avec une vitesse volumique horaire (VVH) comprise entre 0,1 $h^{-1}$ et 5 $h^{-1}$, à une pression totale comprise entre 1 et 15 MPa et avec un rapport volumique entre le débit total d'hydrogène et le débit de la coupe hydrocarbonée hydrotraitée compris entre 30 et 1400 NI/I, étant entendu que ladite coupe hydrocarbonée mise en oeuvre a été préalablement hydrotraitée de manière à réduire d'au moins 50% sa teneur en soufre par rapport à sa teneur en soufre avant hydrotraitement.

Selon l'invention, un catalyseur est considéré comme sulfuré lorsque le rapport molaire entre le soufre (S) présent sur le catalyseur et les métaux est supérieur à 60% du rapport molaire théorique correspondant à la sulfuration totale des métaux.

Le procédé de sulfuration selon l'invention est de type liquide et peut être réalisé de manière *in situ* ou *ex situ,* c'est-à-dire dans ou dehors du réacteur d'hydrotraitement dans lequel le catalyseur sous forme sulfuré est ensuite mis en oeuvre.

• Conditions de sulfuration

Le procédé de sulfuration selon l'invention est mis en oeuvre dans un réacteur en appliquant une ou plusieurs rampes de température séparées éventuellement par un ou plusieurs paliers. La température maximale de sulfuration est généralement comprise entre 150 et 400°C, de préférence entre 200 et 350°C, et de manière très préférée entre 250 et 330°C.

De préférence, on réalise au moins un palier de sulfuration à une température comprise entre 150 et 400°C, de préférence entre 200 et 350°C, et de manière très préférée entre 250 et 330°C. De préférence, la durée dudit palier est suffisamment longue pour atteindre le perçage de l'$H_2S$ dans l'effluent récupéré en sortie du réacteur de sulfuration.

La ou les rampe(s) de température(s) est (sont) généralement comprise(s) entre 1°C par heure et 50°C par heure, de préférence entre 5°C par heure et 30°C par heure.

De préférence, la sulfuration est réalisée en deux paliers, un palier intermédiaire, et un palier final. La durée du palier final est comprise entre 0,5 et 24 heures, de préférence entre 2 et 12 heures.

La vitesse volumique horaire (VVH) est généralement comprise entre 0,1 $h^{-1}$ et 5 $h^{-1}$, de préférence comprise entre 0,3 $h^{-1}$ et 3 $h^{-1}$ et de manière très préférée comprise entre 0,5 $h^{-1}$ et 2 $h^{-1}$. La vitesse volumique horaire (VVH) peut être fixée tout au long de la sulfuration ou peut être augmentée progressivement, ou changée autant de fois qu'il est jugé nécessaire par l'Homme du métier ou que le nécessite l'unité industrielle.

La pression totale est comprise entre 1 et 15 MPa, de préférence entre 1,5 et 14,5 MPa, et de manière très préférée, entre 2,5 et 14 MPa.

En pratique le rapport volumique (en entrée de réacteur) entre le débit total d'hydrogène et le débit de la coupe hydrocarbonée hydrotraitée est compris entre 30 et 1400 Nl/l, de préférence compris entre 50 et 1000 Nl/l et de manière très préférée compris entre 100 et 800 Nl/l. Dans ce calcul le débit d'hydrogène est défini dans les conditions normales de pression et de température.

• Coupe hydrocarbonée hydrotraitée

Les teneurs en soufre (S), en azote (N) et en aromatique sont mesurées conformément aux normes ASTDM D-4294, ASTDM D-5291, ASTDM D-5186 respectivement.

Selon l'invention, la coupe hydrocarbonée mise en oeuvre est préalablement hydrotraitée de manière à réduire d'au moins 50% sa teneur en soufre par rapport à celle avant hydrotraitement, de préférence d'au moins 80% et de manière très préférée d'au moins 90%.

La coupe hydrocarbonée hydrotraitée comprend au moins 90% poids de composés hydrocarbures dont la température d'ébullition est comprise entre 30°C et 520°C à pression atmosphérique.

De préférence la coupe hydrocarbonée hydrotraitée présente une teneur en azote inférieure à 300 ppm poids. De préférence cette teneur est comprise entre 1 et 300 ppm poids, de manière plus préférée comprise entre 1 et 200 ppm poids, et de manière très préférée, comprise entre 1 et 100 ppm poids par rapport au poids total de la coupe hydrocarbonée hydrotraitée.

De préférence la coupe hydrocarbonée hydrotraitée présente une teneur en soufre inférieure à 5000 ppm poids, par rapport au poids total de la coupe hydrocarbonée hydrotraitée. Ladite teneur en soufre est généralement comprise entre 0 et 3000 ppm poids par rapport au poids total de la coupe hydrocarbonée hydrotraitée, de manière préférée comprise entre 0,1 et 1000 ppm poids, de préférence comprise entre 1 et 500 ppm, de manière plus préférée comprise entre 8 et 300 ppm et de manière très préférée comprise entre 8 et 200 ppm poids par rapport au poids total de la coupe hydrocarbonée hydrotraitée.

De préférence la coupe hydrocarbonée hydrotraitée présente une teneur en composés aromatiques inférieure à 40% poids, par rapport au poids total de la coupe hydrocarbonée hydrotraitée, et de préférence inférieure à 30% poids. De manière préférée, la teneur en composés polyaromatiques contenant au moins trois noyaux aromatiques est comprise entre 0 et 0,5% poids et de manière très préféré entre 0 et 0,2% poids par rapport au poids total de la coupe hydrocarbonée hydrotraitée. Enfin, on préfèrera une teneur en composés di-aromatiques inférieure à 10 % poids, de manière préférée, inférieure à 8 %poids et de manière encore plus préférée, inférieure à 6% poids par rapport au poids total de la coupe hydrocarbonée hydrotraitée.

De préférence la coupe hydrocarbonée hydrotraitée est choisie parmi les coupes gazole, kérosène, essences, ou distillats sous vide, prise seule ou en mélange. De préférence, la coupe hydrocarbonée hydrotraitée mise en oeuvre est un effluent hydrotraité issu de l'unité pour laquelle le catalyseur sous forme sulfuré sera utilisé, éventuellement après une étape de fractionnement.

Selon une variante de l'invention, la coupe hydrocarbonée hydrotraitée est une coupe gazole hydrotraitée, comprenant au moins 90% poids de composés dont la température d'ébullition est comprise entre 250°C et 400°C à pression atmosphérique et dont la teneur en soufre est comprise entre 0,1 et 3 000 ppm poids. De préférence la teneur en soufre est comprise entre 5 et 1000 ppm poids, de manière plus préférée comprise entre 8 et 500 ppm poids et de manière très préférée comprise entre 10 et 300 ppm poids par rapport au poids total de la coupe hydrocarbonée hydrotraitée. La coupe gazole peut être issue d'une unité de cokéfaction (coking selon la terminologie anglo-saxonne), d'une unité de viscoréduction (visbreaking selon la terminologie anglo-saxonne), d'une unité de vapocraquage (steam cracking selon la terminologie anglo-saxonne), d'une unité d'hydrotraitement et/ou d'hydrocraquage de coupes plus lourdes et/ou d'une unité de craquage catalytique (Fluid Catalytic Cracking selon la terminologie anglo-saxonne). Alternativement, la coupe hydrocarbonée correspondante avant hydrotraitement est une coupe gazole issue de la distillation directe du pétrole (ou Straight Run Gasoil selon la terminologie anglo-saxonne).

Selon une variante de l'invention, la coupe hydrocarbonée hydrotraitée est une coupe essence hydrotraitée présentant une teneur en soufre comprise entre 0,1 et 1000 ppm poids par rapport au poids total de la coupe hydrocarbonée hydrotraitée, de préférence comprise entre 0,1 et 500 ppm poids. De manière plus préférée, la teneur en soufre dans la coupe essence hydrotraitée est comprise entre 5 et 300 ppm poids et de manière très préférée, comprise entre 8 ppm et 100 ppm poids.

Ladite coupe essence comprend au moins 90% poids de composés dont la température d'ébullition est comprise entre 30 et 260°C à pression atmosphérique. De préférence, la coupe essence avant hydrotraitement est directement issue de la distillation atmosphérique, mais il peut aussi d'agir d'une coupe essence oléfinique issue par exemple d'une unité de craquage catalytique (Fluid Catalytic Cracking selon la terminologie anglo-saxonne).

Selon une autre variante de l'invention, la coupe hydrocarbonée hydrotraitée est une coupe hydrocarbure "lourde" du type distillat sous vide, qui contient au moins 20% poids et souvent au moins 80% poids de composés hydrocarbures dont la température d'ébullition est supérieure à 340°C à pression atmosphérique. En général, les coupes ont un point d'ébullition T5, mesuré par la méthode ASTM D86, supérieur à 340°C à pression atmosphérique et de préférence supérieur à 370°C à pression atmosphérique, c'est à dire que 95% poids des composés présents dans la coupe ont un point d'ébullition supérieur à 340°C, et mieux encore supérieur à 370°C. La teneur en soufre de ces coupes hydrocarbonées du type distillat sous vide est généralement comprise entre 0,1 et 5000 ppm poids, de préférence comprise entre 30 à 1000 ppm poids, et de manière très préférée entre 50 ppm et 200 ppm poids.

Généralement la coupe hydrocarbonée ne contient que de faibles teneurs en métaux (par exemple le nickel et vanadium), et notamment la teneur mesurée est inférieure à 1 ppm poids. La teneur en asphaltènes est généralement inférieure à 1 000 ppm poids.

La coupe hydrocarbonée "lourde" peut être choisie parmi un distillat issu de la distillation sous vide, ou une coupe provenant d'unités d'extraction d'aromatiques des bases d'huile lubrifiante ou issues du déparaffinage au solvant des bases d'huile lubrifiante, et/ou d'huiles désasphaltées. La coupe hydrocarbonée peut être également une huile désasphaltée ou des paraffines issues du procédé Fischer-Tropsch ou encore tout mélange des coupes précédemment citées.

• Les composés soufrés

Les composés soufrés mis en oeuvre dans le procédé selon l'invention, qui sont ajoutés à la coupe hydrotraitée, sont choisis parmi le soufre élémentaire, le disulfure de carbone ($CS_2$), les composés organiques soufrés tels que les mercaptans, les sulfures, les disulfures, les polysulfures, les thiophènes, les sulfoxydes, pris seul ou en mélange.

Le composé soufré présente la capacité de se décomposer en donnant naissance à du sulfure d'hydrogène ($H_2S$), lequel, en présence d'hydrogène conduira aux sulfures désirés des métaux présents dans le précurseur catalytique.

Le composé soufré est ajouté dans la coupe hydrocarbonée hydrotraitée de façon à ce que la quantité de soufre ajouté soit comprise entre 0,2 et 6% poids par rapport au poids de la coupe hydrocarbonée hydrotraitée, de préférence comprise entre 0,4 et 4% poids, de manière très préférée comprise entre 0,5 et 3% poids

Le disulfure préféré est le diméthyle disulfure.

Le sulfure d'alkyle préféré est par exemple le sulfure de diméthyle.

Les polysulfures utilisables répondent à la formulation suivante :

$$R - S_{(n)} - R'$$

dans laquelle n est compris entre 3 et 7 et où les groupements R et R' sont des radicaux organiques comprenant de 1 à 30 atomes de carbone et sont choisis dans parmi les alkyles saturés ou insaturés, linéaires ou ramifiés, les cycles naphténiques, les aryles, les alkylaryles ou arylalkyles et peuvent contenir un ou plusieurs hétéroatomes. On citera par exemple le ditertiododécylepolysulfure, ou encore le ditertiononylpolysulfure (n=5).

Le composé soufré du type mercaptan préféré est le n-butylmercaptan (ou 1-butanethiol).

• Le précurseur catalytique

Dans le cadre de l'invention, le précurseur catalytique qui est sulfuré par le procédé selon l'invention comprend un support réfractaire sur lequel sont déposés au moins un métal du groupe VIB et au moins un métal du groupe VIII et dans lequel les métaux sont à un degré d'oxydation différent de 0 et partiellement ou non sulfurés.
Selon l'invention, un métal est considéré comme partiellement sulfuré lorsque le rapport molaire entre le soufre (S) présent sur le précurseur catalytique et les métaux est inférieur ou égal à 60% du rapport molaire théorique correspondant à la sulfuration totale des métaux, c'est-à-dire :

$(S/métaux)_{précurseur\ catalytique} \leq 0,6 \times (S/métaux)_{théorique}$ avec :

- $(S/métaux)_{précurseur\ catalytique}$ = rapport molaire entre le soufre (S) et les métaux présents sur le précurseur catalytique.
- $(S/métaux)_{théorique}$ = rapport molaire entre le soufre et les métaux présent et correspondant à la sulfuration totale des métaux.

Ce rapport molaire théorique varie selon le métal considéré, par exemple :

- $$(S/Co)_{théorique} = 8/9$$

- $$(S/Ni)_{théorique} = 1/1$$

- $$(S/Mo)_{théorique} = 2/1$$

Le précurseur catalytique peut être choisi parmi :

- un précurseur dit « frais » obtenu par imprégnation des métaux des groupes VIB et VIII sur le support et ensuite séché ;
- un précurseur dit « frais » obtenu par imprégnation des métaux des groupes VIB et VIII sur le support et ensuite séché et puis calciné ;
- un précurseur dit « frais » obtenu par imprégnation des métaux des groupes VIB et VIII en présence d'au moins un additif organique sur le support et ensuite séché;
- un précurseur dit « frais » obtenu par imprégnation des métaux des groupes VIB et VIII en présence d'au moins un additif organique sur le support et ensuite séché et enfin calciné ;
- un catalyseur régénéré, c'est-à-dire un catalyseur qui, après utilisation dans une unité catalytique, a été soumis à au moins une étape de calcination afin de brûler le coke ;
- un catalyseur régénéré et réjuvéné, c'est-à-dire un catalyseur qui, après utilisation dans une unité catalytique, a été soumis à au moins une étape de calcination suivi d'au moins une étape d'imprégnation des métaux et/ou d'un additif organique puis de séchage avec éventuellement une étape finale de calcination.

Le support se présente avantageusement sous forme de billes, d'extrudés, de pastilles, ou d'agglomérats irréguliers et non sphériques dont la forme spécifique peut résulter d'une étape de concassage.
Le support peut être à base d'alumine ou de silice ou de silice-alumine.
Lorsque le support est à base d'alumine, il contient plus de 50% poids d'alumine par rapport au poids total du support. De préférence le support contient uniquement de l'alumine. De préférence, l'alumine est de l'alumine gamma.
Le support d'alumine présente avantageusement un volume poreux total compris entre 0,1 et 1,5 $cm^3.g^{-1}$, de préférence entre 0,4 et 1,1 $cm^3.g^{-1}$. Le volume poreux total est mesuré par porosimétrie au mercure selon la norme ASTM D4284 avec un angle de mouillage de 140°, telle que décrite dans l'ouvrage Rouquerol F.; Rouquerol J.; Singh K. « Adsorption by Powders & Porous Solids: Principle, methodology and applications », Academic Press, 1999, par exemple au moyen d'un appareil modèle Autopore III™ de la marque Micromeritics™.
La surface spécifique du support d'alumine est avantageusement comprise entre 5 et 400 $m^2.g^{-1}$, de préférence entre 10 et 350 $m^2.g^{-1}$, de manière plus préférée entre 40 et 350 $m^2.g^{-1}$. La surface spécifique est déterminée dans la présente invention par la méthode B.E.T selon la norme ASTM D3663, connue de l'homme du métier. Dans un autre cas préféré, le support dudit catalyseur est une silice-alumine contenant au moins 50% poids d'alumine par rapport au poids total du support. La teneur en silice dans le support est d'au plus 50% poids par rapport au poids total du support, le plus souvent inférieure ou égale à 45% poids, de préférence inférieure ou égale à 40% poids.

Lorsque le support dudit précurseur catalytique est à base de silice, il contient plus de 50% poids de silice par rapport au poids total du support. Selon un mode de réalisation, le support contient uniquement de la silice.

Selon une variante particulièrement préférée, le support est constitué d'alumine, de silice ou de silice-alumine.

Le support peut aussi avantageusement contenir en outre de 0,1 à 50% poids de zéolithe. Dans ce cas, toutes les sources de zéolithe peuvent être incorporées audit support. De préférence, la zéolithe est choisie parmi le groupe FAU, BEA, ISV, IWR, IWW, MEI, UWY et de manière très préférée, la zéolithe est choisie parmi le groupe FAU et BEA, telle que la zéolite Y et/ou bêta.

Le support peut également comprendre au moins un métal choisi parmi un métal du groupe VIB et VIII, et/ou au moins un élément dopant choisi parmi le phosphore, le bore, et le fluor et/ou au moins un composé organique utilisables lors de la préparation du précurseur catalytique.

Les métaux du groupe VIB et du groupe VIII peuvent notamment être introduits en partie lors de la mise en forme dudit support, par exemple au moment du malaxage d'un gel d'alumine choisi comme matrice du support.

Le précurseur catalytique mis en oeuvre dans le procédé selon l'invention présente généralement :

- une teneur en métal du groupe VIB comprise entre 3 et 40% poids, de préférence entre 5 et 35 % poids, et de manière plus préférée entre 8 et 30 % poids exprimée en oxyde de métal du groupe VIB par rapport au poids total du précurseur catalytique,
- une teneur en métal du groupe VIII comprise entre 0,5 et 10% poids, de préférence entre 1 et 9% poids, et de manière plus préférée entre 2 et 8% poids, exprimée en oxyde de métal du groupe VIII par rapport au poids total du précurseur catalytique.

Les métaux du groupe VIB préférés sont le molybdène et le tungstène. Les métaux du groupe VIII préférés sont des métaux non nobles et en particulier le cobalt et le nickel. De préférence, lesdits métaux préférés sont choisies parmi les combinaisons cobalt-molybdène, nickel-molybdène, nickel-tungstène ou nickel-cobalt-molybdène, ou nickel-molybdène-tungstène.

La teneur totale en métaux du groupe VIB et du groupe VIII est avantageusement supérieure à 3,5% poids exprimée en oxyde par rapport au poids total du précurseur catalytique.

Le rapport molaire métal du groupe VIII sur métal du groupe VIB dans le catalyseur est préférentiellement compris entre 0,1 et 0,8, de préférence compris entre 0,15 et 0,6 et de manière encore plus préférée compris entre 0,2 et 0,5. Selon une variante, le précurseur catalytique comprend du phosphore. De préférence, la teneur en phosphore est comprise entre 0,1 et 20% poids exprimée en $P_2O_5$, de préférence entre 0,2 et 15% poids exprimé en $P_2O_5$, et de manière très préférée entre 0,3 et 10% poids exprimé en $P_2O_5$ par rapport au poids total du précurseur catalytique et le rapport phosphore sur métal du groupe VIB dans le précurseur catalytique est supérieur ou égal à 0,05, de préférence supérieur ou égal à 0,07, de préférence compris entre 0,08 et 1, de préférence compris entre 0,08 et 0,7 et de manière très préférée compris entre 0,08 et 0,5.

Selon une variante, le précurseur catalytique a été préparé en utilisant un ou plusieurs composés organiques contenant de l'oxygène et/ou de l'azote et/ou du soufre. De préférence, le composé organique est choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée et amide. De préférence, le composé organique est choisi parmi le succinate de diméthyle, la γ-valérolactone, l'acide 4-hydroxyvalérique l'acide 2-pentenoique, l'acide 3-pentenoique, l'acide 4-pentenoique, l'acide γ-cétovalérique, le triéthylèneglycol, le diéthylèneglycol, l'acide éthylènediaminetétra-acétique (EDTA), l'acide maléique, l'acide citrique, le diméthylformamide, la bicine, la tricine, la 2-acetylbutyrolactone, l'acide 2-(2-hydroxyéthyl)-3-oxobutanoïque, l'acide 3-hydroxy-2-(2-hydroxyéthyl)-2-butenoïque, le 3-oxobutanoate de 2-méthoxyéthyle ou le 3-oxobutanoate de 2-méthacryloyloxyéthyle.

**Procédé d'hydrotraitement et/ou hydrocraquage**

Le catalyseur sulfuré par le procédé selon l'invention peut être utilisé dans des procédés d'hydrotraitement et/ou d'hydrocraquage de charges d'hydrocarbures.

Le catalyseur obtenu par le procédé de sulfuration selon l'invention, est avantageusement utilisé pour les réactions d'hydrotraitement et/ou d'hydrocraquage de charges d'hydrocarbures telles que les coupes pétrolières, les coupes issues du charbon ou les hydrocarbures produits à partir du gaz naturel, éventuellement en mélanges ou encore des coupes hydrocarbonée issue de la biomasse. Les catalyseurs sulfurés selon l'invention sont mis en oeuvre dans des réactions d'hydrogénation, d'hydrodéazotation, d'hydrodésaromatisation, d'hydrodésulfuration, d'hydrodéoxygénation, d'hydrodémétallation ou d'hydroconversion de coupes hydrocarbonées.

Les charges d'hydrocarbures traitées dans le procédé d'hydrotraitement sont par exemple des essences, des gazoles, des gazoles sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des coupes provenant des procédés de conversions thermiques ou catalytiques, des coupes lignocellulosiques ou plus généralement des coupes issues de la biomasse, prises seules ou en mélange. Les charges d'hydrocarbures qui sont traitées, et en particulier celles citées ci-dessus, contiennent généralement des hétéroatomes tels que le soufre, l'oxygène et l'azote et, pour les coupes lourdes, elles contiennent le plus souvent également des métaux.

La charge d'hydrocarbure est par exemple une coupe d'hydrocarbures ayant un intervalle de distillation compris entre 30 et 400°C. Par exemple cette charge d'hydrocarbures est une coupe de type gazole ou une coupe du type essence oléfinique issue d'une unité de craquage catalytique (Fluid Catalytic Cracking selon la terminologie anglo-saxonne).

Les conditions opératoires utilisées dans les procédés mettant en oeuvre les réactions d'hydrotraitement de coupe hydrocarbonées décrites ci-dessus sont généralement les suivantes : la température est généralement comprise entre 180 et 450°C, et de préférence entre 250 et 440°C, la pression est généralement comprise entre 0,5 et 30 MPa, et de préférence entre 1 et 18 MPa, la vitesse volumique horaire est généralement comprise entre 0,1 et 20 h$^{-1}$ et de préférence entre 0,2 et 5 h$^{-1}$, et avec un rapport un rapport entre le débit d'hydrogène et le débit de la charge d'hydrocarbures compris entre 50 à 5000 Nl/l et de préférence compris entre 80 à 2000 Nl/l.

Selon un mode d'utilisation, ledit procédé d'hydrotraitement selon l'invention est un procédé d'hydrotraitement, notamment d'hydrodésulfuration (HDS), d'une coupe essence ou gazole réalisé en présence d'au moins un catalyseur sulfuré selon l'invention. Ledit procédé d'hydrotraitement vise à éliminer les composés soufrés présents dans ladite coupe essence ou gazole de façon à atteindre les normes environnementales en vigueur, à savoir une teneur en soufre autorisée jusqu'à 10 ppm. Il permet avantageusement aussi de réduire les teneurs en aromatiques et en azote de la coupe gazole à hydrotraiter.

Les exemples qui suivent démontrent le gain d'activité important sur les catalyseurs sulfurés par le procédé selon l'invention par rapport aux catalyseurs de l'art antérieur et précisent l'invention sans toutefois en limiter la portée.

## Exemples

Dans les exemples, ci-après, la coupe F1 est obtenue par prétraitement en lit fixe d'une coupe gazole correspondant à la coupe F2. Ladite coupe F2 est identique à la coupe gazole mise en oeuvre lors des tests d'hydrodésulfuration décrits dans l'exemple 3.

## Exemple 1 : Préparation d'un précurseur de catalytique C1 du type CoMoP sur alumine.

Sur un support d'alumine présentant une surface BET de 230 m$^2$/g, un volume poreux obtenu par porosimétrie au mercure de 0,78 ml/g et un diamètre moyen des pores de 11,5 nm défini comme le diamètre médian en volume par porosimétrie au mercure et qui se présente sous la forme « extrudé », on ajoute du cobalt, du molybdène et du phosphore. La solution d'imprégnation est préparée par dissolution à 90°C de l'oxyde de molybdène (24,34 g) et d'hydroxyde de cobalt (5,34 g) dans 7,47 g d'une solution d'acide phosphorique à 85% dans l'eau. Après imprégnation à sec, les extrudés sont laissés à maturer en atmosphère saturée en eau pendant 12 h à température ambiante, puis ils sont séchés à 90°C pendant 16 heures. Le précurseur catalytique séché ainsi obtenu est noté C1. Les teneurs en cobalt, molybdène et phosphore, exprimées en oxyde et par rapport au poids total du précurseur catalytique sec C1 sont les suivantes : MoO$_3$ = 22,5 $\pm$ 0,2 % poids, CoO = 4,1 $\pm$ 0,1 % poids et P$_2$O$_5$ = 4,0 $\pm$ 0,1 % poids.

## Exemple 2 : Activation du précurseur catalytique C1 par sulfuration

La sulfuration du précurseur catalytique C1 est menée dans un réacteur de type lit fixe. Une rampe unique de température de 16°C par heure a été appliquée, avec une vitesse volumique horaire (VVH) de 0.5 h$^{-1}$. La pression totale appliquée est de 3 MPa et le rapport volumique entre l'hydrogène et la coupe hydrocarbonée (hydrotraitée ou non hydrotraitée) est de 150 Nl/l en entrée de réacteur.

La température finale de palier a été fixée à 300°C et la durée a été variée pour chaque procédure/coupe entre 2 heures, 4 heures, 8 heures et 12 heures

### - Sulfuration du précurseur catalytique C1 selon le procédé de l'invention

La procédure de sulfuration, conforme à l'invention, utilise la coupe hydrocarbonée hydrotraitée F1 dont les caractéristiques sont données ci-après. Ladite coupe F1 contient 176 ppm poids de soufre, 22 ppm d'azote et 14,6% poids de carbone aromatique (mesuré par RMN).

La coupe F1 présente les caractéristiques suivantes :

- Densité à 15 °C :  0,8432 g/cm$^3$
- Distillation Simulée :

  • PI :  157 °C
  • 10 % :  239 °C
  • 50 % :  311 °C
  • 90 % :  362 °C
  • PF :  392 °C

Dans la coupe F1 est ajouté, avant la mise en oeuvre du procédé de sulfuration, 2% poids de diméthyle-disulfure (DMDS), portant la teneur globale en soufre de la coupe F1 à 1,38 % poids.

Tableau 1 : Sulfuration de C1 par le procédé selon l'invention

| Précurseur catalytique | Procédure | Catalyseur | Condition | Durée du palier de sulfuration (heures) |
|---|---|---|---|---|
| C1 | P1 | C(P1) | F1 + DMDS | 2 |
| C1 | P2 | C(P2) | F1 + DMDS | 4 |
| C1 | P3 | C(P3) | F1 + DMDS | 8 |
| C1 | P4 | C(P4) | F1 + DMDS | 12 |

- Sulfuration du précurseur catalytique C1 selon une procédure comparative

Les premières procédures de sulfuration non conformes à l'invention, notées P5, P6, P7, et P8, utilisent la coupe F2 et aucun additif de sulfuration supplémentaire.
Les secondes procédures de sulfuration non conformes à l'invention, notées P9, P10, P11, et P12 utilisent ladite coupe F2 à laquelle est ajouté 2% poids de diméthyle-disulfure (DMDS), portant la teneur globale en soufre de la coupe F2 à 2,72 % poids.
Ladite coupe F2 initiale contient 13 555 ppm poids de soufre, 115 ppm d'azote et 16,5% poids de carbone aromatique (mesuré par RMN) et présente les caractéristiques suivantes :

- Densité à 15 °C :  0,8541 g/cm$^3$
- Distillation Simulée :
  • PI :  160 °C
  • 10 % :  242 °C
  • 50% :  317 °C
  • 90 % :  369 °C
  • PF :  404 °C

Tableau 2 : Sulfuration de C1 par un procédé comparatif

| Précurseur catalytique | Procédure | Catalyseur | Condition | Durée du palier de sulfuration (heures) |
|---|---|---|---|---|
| C1 | P5 | C(P5) | F2 (sans DMDS) | 2 |
| C1 | P6 | C(P6) | F2 (sans DMDS) | 4 |
| C1 | P7 | C(P7) | F2 (sans DMDS) | 8 |
| C1 | P8 | C(P8) | F2 (sans DMDS) | 12 |
| C1 | P9 | C(P9) | F2 (avec DMDS) | 2 |
| C1 | P10 | C(P10) | F2 (avec DMDS) | 4 |
| C1 | P11 | C(P11) | F2 (avec DMDS) | 8 |

(suite)

| Précurseur catalytique | Procédure | Catalyseur | Condition | Durée du palier de sulfuration (heures) |
|---|---|---|---|---|
| C1 | P12 | C(P12) | F2 (avec DMDS) | 12 |

**Exemple 3 : Mise en oeuvre des catalyseurs sulfurés dans une réaction d'hydrodésulfuration**

Les tests d'hydrodésulfuration est menés sur la coupe F2 dans un réacteur pilote isotherme à lit fixe traversé, les fluides circulant de bas en haut. La réaction d'hydrodésulfuration a été conduit dans les conditions opératoires suivantes : une pression totale de 3 MPa, un volume de catalyseur de 30 cm$^3$, une température de 330 à 360 °C, un débit de coupe de 30 cm$^3$/h correspondant à une vitesse volumique horaire (VVH) de 1h$^{-1}$ et avec un débit d'hydrogène de 24 l/h, soit un rapport volumique entre l'hydrogène et la coupe F2 de 240 Nl/l.

Les performances catalytiques d'hydrodésulfuration des catalyseurs obtenus par les différentes procédures de sulfuration sont données dans le Tableau 3. Elles sont exprimées en degrés Celsius par rapport à un catalyseur sulfuré selon une procédure de sulfuration non-conforme à l'invention choisi comme référence et correspondent à l'écart de température à appliquer pour atteindre 50 ppm de soufre dans l'effluent. Une différence de température négative par rapport au catalyseur de référence signifie que la cible de teneur en soufre est atteinte pour une température plus basse et qu'il y a donc un gain d'activité. Une valeur différence de température positive signifie que la cible de teneur en soufre est atteinte pour une température plus élevée et qu'il y a donc une perte d'activité.

Tableau 3 : Activité relative à iso-volume en hydrodésulfuration (HDS) de gazole des catalyseurs sulfurés

| Procédure de sulfuration | Catalyseurs | Durée du palier de sulfuration (heures) | Activité HDS |
|---|---|---|---|
| **Conforme** | C(P1) | **2** | **Base + 0.2°C** |
| **Conforme** | C(P2) | **4** | **Base - 0.3°C** |
| **Conforme** | C(P3) | **8** | **Base - 0.8°C** |
| **Conforme** | C(P4) | **12** | **Base - 1°C** |
| Non-conforme | C(P5) | 2 | Base + 5.1°C |
| Non-conforme | C(P6) | 4 | Base + 3.5°C |
| Non-conforme | C(P7) | 8 | Base + 1.2°C |
| Non-conforme | C(P8) | 12 | Base |
| Non-conforme | C(P9) | 2 | Base + 1.5°C |
| Non-conforme | C(P10) | 4 | Base + 0.5°C |
| Non-conforme | C(P11) | 8 | Base + 0.2°C |
| Non-conforme | C(P12) | 12 | Base - 0.3°C |

Dans le Tableau 3, ci-dessus, l'activité du catalyseur C(P8) sert de base de référence pour évaluer l'activité des autres catalyseurs mis en oeuvre dans la réaction d'hydrodésulfuration.

L'activité des catalyseurs lors de la réaction d'hydrodésulfuration est représentative de l'efficacité du procédé de sulfuration des précurseurs catalytiques.

Le catalyseur C(P11) activé par sulfuration avec une coupe non hydrotraitée (F2) et avec DMDS atteint une activité comparable au catalyseur C(P8) après 8 heures de palier final de sulfuration.

Le catalyseur C(P1) activé par le procédé selon l'invention, en utilisant 2 heures de palier final de sulfuration, a une activité en hydrodésulfuration comparable à celle des catalyseurs C(P8) et C(P11) qui ont respectivement subi 12 heures et 8 heures de palier final de sulfuration.

Il apparait donc clairement au vu des activités en hydrodésulfuration des catalyseurs C(P1) à C(P4) présentées dans le tableau 3, que le procédé de sulfuration selon l'invention permet l'obtention de catalyseur ayant une activité similaire au catalyseur de l'art antérieur en un temps de sulfuration plus court. Le procédé selon l'invention permet également de fournir un catalyseur sulfuré plus actif par rapport à ceux obtenus par des méthodes de l'art antérieur à iso-temps de sulfuration.

**EP 3 338 887 B1**

**Revendications**

1. Procédé de sulfuration d'un précurseur catalytique comprenant un support sur lequel sont déposés au moins un métal du groupe VIB et au moins un métal du groupe VIII, dans lequel on met en contact en présence d'hydrogène ledit précurseur avec une coupe hydrocarbonée hydrotraitée comprenant au moins 90% poids de composés hydrocarbures dont la température d'ébullition est comprise entre 30°C et 520°C à pression atmosphérique et un composé soufré ajouté à ladite coupe hydrocarbonée hydrotraitée, la teneur en soufre ajouté étant comprise entre 0,2 et 6% poids par rapport au poids de la coupe hydrocarbonée hydrotraitée, ledit procédé de sulfuration étant mis en oeuvre à une température comprise entre 150 et 400°C, avec une vitesse volumique horaire (VVH) comprise entre 0,1 h⁻¹ et 5 h⁻¹, à une pression totale comprise entre 1 et 15 MPa et avec un rapport volumique entre le débit total d'hydrogène et le débit de la coupe hydrocarbonée hydrotraitée compris entre 30 et 1400 NI/I, étant entendu que ladite coupe hydrocarbonée mise en oeuvre a été préalablement hydrotraitée de manière à réduire d'au moins 50% sa teneur en soufre par rapport à sa teneur en soufre avant hydrotraitement.

2. Procédé selon la revendication 1 dans lequel on réalise au moins un palier de sulfuration à une température comprise entre 150 et 400°C.

3. Procédé selon l'une quelconque des revendications précédentes dans lequel la pression totale est comprise entre 1,5 et 14,5 MPa et le rapport volumique entre le débit total d'hydrogène et le débit de la coupe hydrocarbonée hydrotraitée est compris entre 50 et 1000 NI/I.

4. Procédé selon l'une quelconque des revendications précédentes dans lequel la charge hydrocarbonée hydrotraitée présente une teneur en soufre inférieure à 5000 ppm poids et une teneur en azote inférieure à 300 ppm poids, par rapport au poids total de la coupe hydrocarbonée hydrotraitée.

5. Procédé selon l'une quelconque des revendications précédentes dans lequel la coupe hydrocarbonée hydrotraitée est choisie parmi les coupes gazole, kérosène, essences, ou distillats sous vide, prise seule ou en mélange.

6. Procédé selon l'une quelconque des revendications précédentes dans lequel la coupe hydrocarbonée hydrotraitée est une coupe gazole présentant au moins 90% des composés dont la température d'ébullition est comprise entre 250°C et 400°C à pression atmosphérique et une teneur en soufre comprise entre 0,1 et 3 000 ppm poids.

7. Procédé selon l'une quelconque des revendications 1 à 5 dans lequel la coupe hydrocarbonée hydrotraitée est une coupe essence comprenant au moins 90% poids de composés dont la température d'ébullition est comprise entre 30 et 260°C à pression atmosphérique et une teneur en soufre comprise entre 0,1 et 1000 ppm poids.

8. Procédé selon l'une quelconque des revendications 1 à 5 dans lequel la coupe hydrocarbonée hydrotraitée est une coupe distillat sous vide présentant au moins 80% poids de composés hydrocarbures dont la température d'ébullition est supérieure à 340°C à pression atmosphérique et une teneur en soufre comprise entre 0,1 et 5000 ppm poids.

9. Procédé selon l'une quelconque des revendications précédentes dans lequel le composé soufré mis en oeuvre est choisi parmi le soufre élémentaire, le disulfure de carbone (CS$_2$), les composés organiques soufrés tels que les mercaptans, les sulfures, les disulfures, les polysulfures, les thiophènes, les sulfoxydes, pris seul ou en mélange.

10. Procédé selon l'une quelconque des revendications précédentes dans lequel le précurseur catalytique comprend un support à base d'alumine ou de silice ou de silice-alumine, au moins un métal du groupe VIB à une teneur exprimée en oxyde comprise entre 3 et 40 % poids et au moins un métal du groupe VIII à une teneur exprimée en oxyde comprise entre 0,5 et 10 % poids, par rapport au poids total du précurseur catalytique.

11. Procédé selon l'une quelconque des revendications précédentes dans lequel le précurseur catalytique comprend au moins un élément dopant choisi parmi le phosphore, le bore, et le fluor et/ou au moins un composé organique utilisables lors de la préparation du précurseur catalytique.

12. Procédé selon l'une quelconque des revendications précédentes dans lequel le métal du groupe VIB est choisi parmi molybdène et le tungstène et le métal du groupe VIII est choisi parmi le cobalt et le nickel.

13. Procédé selon la revendication 12 dans lequel les métaux du groupe VIB et VIII sont choisis parmi les combinaisons cobalt-molybdène, nickel-molybdène, nickel-tungstène ou nickel-cobalt-molybdène, ou nickel-molybdène-tungstène

13

**Patentansprüche**

1. Verfahren zur Sulfurierung einer Katalysatorvorstufe, die einen Träger umfasst, auf dem mindestens ein Metall der Gruppe VIB und mindestens ein Metall der Gruppe VIII abgeschieden sind, bei dem die Vorstufe in Gegenwart von Wasserstoff mit einer hydrierten Kohlenwasserstofffraktion, die mindestens 90 Gew.-% Kohlenwasserstoffverbindungen umfasst, deren Siedetemperatur bei Atmosphärendruck zwischen 30 °C und 520 °C beträgt, und einer Schwefelverbindung, die zur hydrierten Kohlenwasserstofffraktion gegeben wird, in Kontakt gebracht wird, wobei der Gehalt des zugegebenen Schwefels zwischen 0,2 und 6 Gew.-% beträgt, bezogen auf das Gewicht der hydrierten Kohlenwasserstofffraktion, wobei das Sulfurierungsverfahren bei einer Temperatur zwischen 150 und 400 °C mit einer stündlichen Raumgeschwindigkeit (VVH) zwischen 0,1 h$^{-1}$ und 5 h$^{-1}$ bei einem Gesamtdruck zwischen 1 und 15 MPa und mit einem Volumenverhältnis zwischen dem Wasserstoff-Gesamtdurchsatz und dem Durchsatz der hydrierten Kohlenwasserstofffraktion zwischen 30 und 1400 Nl/l durchgeführt wird, mit der Maßgabe, dass die verwendete Kohlenwasserstofffraktion zuvor so hydriert wurde, dass ihr Schwefelgehalt in Bezug auf ihren Schwefelgehalt vor dem Hydrotreating um mindestens 50 % reduziert wurde.

2. Verfahren nach Anspruch 1, wobei mindestens eine Sulfurierungsstufe bei einer Temperatur zwischen 150 und 400 °C durchgeführt wird.

3. Verfahren nach einem der vorhergehenden Ansprüche, wobei der Gesamtdruck zwischen 1,5 und 14,5 MPa beträgt und das Volumenverhältnis zwischen dem Wasserstoff-Gesamtdurchsatz und dem Durchsatz der hydrierten Kohlenwasserstofffraktion zwischen 50 und 1000 Nl/l beträgt.

4. Verfahren nach einem der vorhergehenden Ansprüche, wobei das hydrierte Kohlenwasserstoff-Einsatzmaterial einen Schwefelgehalt von weniger als 5000 Gewichts-ppm und einen Stickstoffgehalt von weniger als 300 Gewichts-ppm aufweist, bezogen auf das Gesamtgewicht der hydrierten Kohlenwasserstofffraktion.

5. Verfahren nach einem der vorhergehenden Ansprüche, wobei die hydrierte Kohlenwasserstofffraktion aus Dieselkraftstoff-, Kerosin-, Benzin- oder Vakuumdestillatfraktionen, einzeln oder als Mischung, ausgewählt wird.

6. Verfahren nach einem der vorhergehenden Ansprüche, wobei es sich bei der hydrierten Kohlenwasserstofffraktion um eine Dieselkraftstofffraktion handelt, die mindestens 90 % Verbindungen aufweist, deren Siedetemperatur bei Atmosphärendruck zwischen 250 °C und 400 °C und deren Schwefelgehalt zwischen 0,1 und 3000 Gewichts-ppm beträgt.

7. Verfahren nach einem der Ansprüche 1 bis 5, wobei es sich bei der hydrierten Kohlenwasserstofffraktion um eine Benzinfraktion handelt, die mindestens 90 Gew.-% Verbindungen umfasst, deren Siedetemperatur bei Atmosphärendruck zwischen 30 und 260 °C und deren Schwefelgehalt zwischen 0,1 und 1000 Gewichts-ppm beträgt.

8. Verfahren nach einem der Ansprüche 1 bis 5, wobei es sich bei der hydrierten Kohlenwasserstofffraktion um eine Vakuumdestillatfraktion handelt, die mindestens 80 Gew.-% Kohlenwasserstoffverbindungen aufweist, deren Siedetemperatur bei Atmosphärendruck höher als 340 °C ist und deren Schwefelgehalt zwischen 0,1 und 5000 Gewichts-ppm beträgt.

9. Verfahren nach einem der vorhergehenden Ansprüche, wobei die verwendete Schwefelverbindung aus elementarem Schwefel, Kohlenstoffdisulfid ($CS_2$), organischen Schwefelverbindungen, wie Mercaptanen, Sulfiden, Disulfiden, Polysulfiden, Thiophenen, Sulfoxiden, einzeln oder als Mischung, ausgewählt ist.

10. Verfahren nach einem der vorhergehenden Ansprüche, wobei die Katalysatorvorstufe einen Träger auf der Grundlage von Aluminiumoxid oder Siliciumdioxid oder Siliciumdioxid-Aluminiumoxid, mindestens ein Metall der Gruppe VIB mit einem als Oxid ausgedrückten Gehalt zwischen 3 und 40 Gew.-% und ein Metall der Gruppe VIII mit einem als Oxid ausgedrückten Gehalt zwischen 0,5 und 10 Gew.-%, bezogen auf das Gesamtgewicht der Katalysatorvorstufe, umfasst.

11. Verfahren nach einem der vorhergehenden Ansprüche, wobei die Katalysatorvorstufe mindestens ein aus Phosphor, Bor und Fluor ausgewähltes Dotierelement und/oder mindestens eine organische Verbindung umfasst, die bei der Herstellung der Katalysatorvorstufe verwendbar sind.

12. Verfahren nach einem der vorhergehenden Ansprüche, wobei das Metall der Gruppe VIB aus Molybdän und Wolfram ausgewählt ist und das Metall der Gruppe VIII aus Kobalt und Nickel ausgewählt ist.

13. Verfahren nach Anspruch 12, wobei die Metalle der Gruppen VIB und VIII aus den Kombinationen Kobalt-Molybdän, Nickel-Molybdän, Nickel-Wolfram oder Nickel-Kobalt-Molybdän oder Nickel-Molybdän-Wolfram ausgewählt sind.

**Claims**

1. Process for sulfurization of a catalytic precursor comprising a support on which at least one group VIB metal and at least one group VIII metal are deposited, in which process said precursor is brought into contact, in the presence of hydrogen, with a hydrotreated hydrocarbon cut comprising at least 90% by weight of hydrocarbon compounds having a boiling point between 30°C and 520°C at atmospheric pressure and a sulfur-containing compound added to said hydrotreated hydrocarbon cut, the added sulfur content being between 0.2% and 6% by weight relative to the weight of the hydrotreated hydrocarbon cut, said sulfurization process being carried out at a temperature between 150°C and 400°C, with an hourly space velocity (HSV) of between $0.1 \ h^{-1}$ and $5 \ h^{-1}$, at a total pressure of between 1 and 15 MPa and with a volume ratio between the total hydrogen flow and the flow of hydrotreated hydrocarbon cut between 30 and 1400 Nl/l, it being understood that said hydrocarbon cut used has been previously hydrotreated so as to reduce its sulfur content by at least 50% relative to its sulfur content before hydrotreating.

2. Process according to Claim 1, in which at least one sulfurization stage is carried out at a temperature between 150°C and 400°C.

3. Process according to either one of the preceding claims, in which the total pressure is between 1.5 and 14.5 MPa and the volume ratio between the total hydrogen flow and the flow of the hydrotreated hydrocarbon cut is between 50 and 1000 Nl/l.

4. Process according to any one of the preceding claims, in which the hydrotreated hydrocarbon feedstock has a sulfur content of less than 5000 ppm by weight and a nitrogen content of less than 300 ppm by weight, relative to the total weight of the hydrotreated hydrocarbon cut.

5. Process according to any one of the preceding claims, in which the hydrotreated hydrocarbon cut is chosen from gas oil, kerosene, gasoline, or vacuum distillate cuts, taken alone or as a mixture.

6. Process according to any one of the preceding claims, in which the hydrotreated hydrocarbon cut is a gas oil cut having at least 90% of compounds with a boiling point of between 250°C and 400°C at atmospheric pressure and a sulfur content of between 0.1 and 3000 ppm by weight.

7. Process according to any one of the claims 1 to 5, in which the hydrotreated hydrocarbon cut is a gasoline cut comprising at least 90% of compounds with a boiling point of between 30°C and 260°C at atmospheric pressure and a sulfur content of between 0.1 and 1000 ppm by weight.

8. Process according to any one of the claims 1 to 5, in which the hydrotreated hydrocarbon cut is a vacuum distillate cut having at least 80% of hydrocarbon compounds with a boiling point above 340°C at atmospheric pressure and a sulfur content of between 0.1 and 5000 ppm by weight.

9. Process according to any one of the preceding claims, in which the sulfur-containing compound used is chosen from elemental sulfur, carbon disulfide ($CS_2$), sulfur-containing organic compounds such as mercaptans, sulfides, disulfides, polysulfides, thiophenes, sulfoxides, taken alone or as a mixture.

10. Process according to any one of the preceding claims, in which the catalytic precursor comprises a support based on alumina or silica or silica-alumina, at least one group VIB metal having a content, expressed as oxide, of between 3% and 40% by weight and at least one group VIII metal having a content, expressed as oxide, of between 0.5% and 10% by weight, relative to the total weight of the catalytic precursor.

11. Process according to any one of the preceding claims, in which the catalytic precursor comprises at least one doping element chosen from phosphorus, boron, and fluorine and/or at least one organic compound which can be used during the preparation of the catalytic precursor.

12. Process according to any one of the preceding claims, in which the group VIB metal is chosen from molybdenum and tungsten and the group VIII metal is chosen from cobalt and nickel.

13. Process according to claim 12, in which the group VIB and VIII metals are chosen from the combinations cobalt-molybdenum, nickel-molybdenum, nickel-tungsten or nickel-cobalt-molybdenum, or nickel-molybdenum-tungsten.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4111796 A
- US 4172027 A
- FR 2572309
- EP 130850 A
- EP 0785022 A
- US 4530917 A
- FR 2706326
- EP 0064429 A
- EP 1634939 A
- WO 0176741 A
- FR 2758478
- WO 02062471 A

**Littérature non-brevet citée dans la description**

- Catalysis by Transition Metal Sulphides. **RAYBAUD PASCAL ; TOULHOAT HERVÉ.** Molecular Theory to Industrial Application. Technip
- Directive 2003/70/CE. *Journal Officiel de l'Union européenne,* 22 Mars 2003, vol. L76, L76, , 10-L76, 19
- *Journal of catalysis,* 1975, vol. 36, 164
- CRC Handbook of Chemistry and Physics. CRC press, 2000
- **ROUQUEROL F. ; ROUQUEROL J. ; SINGH K.** Adsorption by Powders & Porous Solids: Principle, methodology and applications. Academic Press, 1999